# EUROPEAN PATENT SPECIFICATION

(11) **EP 3 512 061 B1**
(45) Date of publication and mention of the grant of the patent: **22.07.2020**
(21) Application number: 18400001.6
(22) Date of filing: 10.01.2018
(51) Int. Cl.: H02J 1/00, H02J 7/00

(54) **AN OVERRIDE CONTROL CIRCUIT FOR THE RELIABLE AND SAFE OPERATION OF AN ELECTRICAL SYSTEM**
ÜBERBRÜCKUNGSSTEUERUNGSSCHALTUNG FÜR DEN ZUVERLÄSSIGEN UND SICHEREN BETRIEB EINES ELEKTRISCHEN SYSTEMS
CIRCUIT DE COMMANDE PRIORITAIRE POUR LE FONCTIONNEMENT FIABLE ET SÛR D'UN SYSTÈME ÉLECTRIQUE

(43) Date of publication of application: 17.07.2019
(73) Proprietor: AIRBUS HELICOPTERS DEUTSCHLAND GmbH, 86609 Donauwörth (DE)
(72) Inventor: Geiss, Michael, 86655 Harburg (DE)
(74) Representative: GPI & Associés

(56) References cited:
- EP-A2- 2 230 743
- US-A- 4 950 913
- US-A1- 2004 051 383
- US-A1- 2012 077 454

## Description

The invention is related to the reliability and safety of operating an electrical system in a system application, and, more particularly, to a system application with an electrical system having an energy source and energy sinks and means for controlling the discharge of the energy source by the energy sinks.

System applications with electrical systems having an energy source and energy sinks that perform, at least in some scenarios, safety-critical operations are found in many places, such as spacecraft, aircraft, motor vehicles, drones, alarm systems, power plants, just to name a few. Examples for safety-critical operations, which are sometimes also referred to as mission-critical operations, performed by electrical systems in an aircraft include controlling the aircraft's roll, pitch, yaw, and thrust. A failure of any of these safety-critical operations under certain conditions can potentially lead to an instable motion of the aircraft with life endangering consequences. Thus, the continued, uninterrupted, fail-safe operation of these electrical systems and thus of the system application is often required.

A control function typically monitors and assesses the safety of the electrical system including the safety of the energy source and/or energy sinks to determine whether the electrical system operates within safety margins. For example, the control function may monitor the discharge power, the depth of discharge, and/or the temperature of the energy source and/or the temperature of the energy sink.

As an example, the control function determines that the temperature of the energy source is outside a safe operating temperature range, and, as a consequence, the energy source incurs the risk of a thermal runaway temperature that can lead to fire. As another example, the control function determines that the temperature of the energy sink is outside a safe operating temperature range, and, as a consequence, the energy sink may overheat and ultimately fail. In both examples, the control function usually shuts down the connection between energy source and energy sink, thereby disabling the discharge of the energy source by the energy sink in order to prevent the failure of either or both of the energy source and/or the energy sink.

However, since the continued, uninterrupted, fail-safe operation of these electrical systems and hence the corresponding system application is often required, an override function that prevents the control function from shutting down the connection between energy source and energy sink under certain conditions may be desirable.

Document US 2013/0187616 A1 describes a system comprising a discharge initiating device and a plurality of battery modules that are electrically connected with one another. Each of the battery modules comprises a plurality of battery cells, a discharge load connected in series with the battery cells, a switch coupled between the battery cells and the discharge load, a temperature sensor, and a controller adapted for placing the switch in its electrically connected state upon being driven by the discharge initiating device. The invention further provides a safe method of draining the energy from the power supply assembly, for example in case of an accident. However, the system acts after an accident happened with the goal of discharging the energy source. An override function that ensures a continued, uninterrupted, fail-safe operation of safety-critical components is not described.

Document US 8,886,152 B2 describes an apparatus, system, and method for overriding battery discharge protection in a mobile communication device in the presence of an emergency communication. The method of overriding battery discharge protection in a mobile communication device comprises determining a measured battery voltage; determining an excess battery discharge condition, wherein further battery discharge will result in an impaired ability to recharge a battery; detecting an emergency communication state; disabling battery discharge protection in response to the emergency communication state; and continuing discharge of the battery. However, the override function merely overrides the discharge protection of the battery without taking into account the status of the energy sink.

The document EP2230743 describes a power supply system used for power distribution to loads in a safety-critical power supply network in various aircraft. The power supply system comprises modules each having a power source, a power bus and a distributed control system. The distributed control system comprises a central controller that is operably coupled to the modules through a data bus, so as to enable redundancy in the wiring and the use of differing voltage/frequency power sources/generators. Status signals shall allow a user to manually over-ride a programmed logic of the system.

The document US4950913 describes a monitoring device in a vehicle for monitoring a battery powering a device when a motor of the vehicle is not running. This system includes a programmable timer power switch (PTPS) installed to keep the battery from discharging. A manual override switch shall be used to override a timer/control logic of the system and turn "on" or "off" the device.

Based on the limitations and drawbacks of the prior art, an objective of the present invention is to provide an electrical system for a system application with an energy source, energy sinks, control circuits that monitor the status of the energy source and/or the energy sinks and control switches between the energy source and the energy sinks, and an override control circuit that introduces an overlaid authority over the control circuits based on the overall system application status and the status of the electrical system. The override control circuit should overrule, if necessary, the individual control circuits' decision and control the individual switches such that one or more of the respective energy sinks continue to discharge the energy source, thereby preventing the failure of safety-critical system applications.

The electrical system should have a simple hardware-based design to achieve a robust, reliable, and fail-safe system application that requires a low qualification effort. Moreover, the electrical system should provide a high safety level for humans at a comparatively low cost. This objective is solved by an electrical system comprising the features of claim 1.

More specifically, according to the present invention, an electrical system may include an electrical energy source, a first electrical energy sink that generates a first sink status signal, a second electrical energy sink that generates a second sink status signal, a first switch circuit that couples the electrical energy source to the first electrical energy sink and generates a first switch status signal, a second switch circuit that couples the electrical energy source to the second electrical energy sink and generates a second switch status signal, first and second control circuits, and an override control circuit. The first control circuit may receive the first sink status signal from the first electrical energy sink, and generate a first switch control signal based on the first sink status signal, wherein the first control circuit controls the first switch circuit by means of the first switch control signal. The second control circuit may receive the second sink status signal from the second electrical energy sink and generate a second switch control signal based on the second sink status signal, wherein the second control circuit controls the second switch circuit by means of the second switch control signal. The override control circuit may receive the first and second switch status signals, generate a first switch override signal based on the first switch status signal that overrides the first switch control signal to control the first switch circuit if a first predetermined override condition is satisfied, the first predetermined override condition being based on whether the first electrical energy sink is performing a safety-critical operation, and generate a second switch override signal based on the second switch status signal that overrides the second switch control signal to control the second switch circuit if a second predetermined override condition is satisfied, the second predetermined override condition being based on whether the second electrical energy sink is performing a safety-critical operation.

A system application may have one or more electrical systems that contribute to the operation of the system application. If desired, one or more of the electrical systems may be independently controlled. Each electrical system may have a switch circuit between an energy source and one or more energy sinks and an independent control circuit that controls the switch circuit by means of a switch control signal. If desired, each electrical system may have means at which an operator can control the respective switch circuit via the respective control circuit, thereby coupling or decoupling the energy source and the energy sink. Based on status signals from the energy source and/or the energy sink combined with a known good operating condition of the electrical system, the respective control circuit may decide whether to couple or decouple the energy source and the energy sink (i.e., close or open the switching circuit) and thus enable or disable the operation of the respective energy sink.

An override control circuit may act as an overlaid protection function. For example, the override control circuit may gather the operating status (e.g., switch status signals) from each control circuit or directly from the switch circuit, if desired. The override control circuit may react to the switch status signals by sending one or more switch override signals that cause the respective switch circuit to behave as commanded by the override control circuit. Thereby, the switch override signals from the override control circuit overrule the respective switch control signals from the control circuits. For example, the overruling of the control circuits' generated switch control signals may be achieved by enabling a hard-wired supply line from the override control circuit to directly energize the driver stages (e.g., contactor coils) of the switch circuit.

According to one aspect, the first control circuit may route the first switch status signal from the first switch circuit to the override control circuit, and the second control circuit may route the second switch status signal from the second switch circuit to the override control circuit.

According to one aspect, a transportation vehicle may include the first electrical energy sink, and the first electrical energy sink is a mission-critical electrical component of the transportation vehicle that satisfies the first predetermined override condition.

According to one aspect, the transportation vehicle is selected from a group consisting of a spacecraft, an aircraft, a car, a bus, a truck, and a train.

According to one aspect, the electrical energy source may generate a source status signal, wherein the first control circuit receives the source status signal from the electrical energy source and generates the first switch control signal based on the first sink status signal and the source status signals, and wherein the second control circuit receives the source status signal from the electrical energy source and generates the second switch control signal based on the second sink status signal and the source status signals.

According to one aspect, the electrical system may comprise an operator switch that generates a first desired switch status signal and sends the first desired switch status signal to the first control circuit.

According to one aspect the first control circuit generates the first switch control signal based on the first sink status signal and the source status signals and the first desired switch status signal.

According to one aspect, the first sink status signal and the source status signals have priority over the first desired switch status signal.

According to one aspect, the electrical system may further comprise an additional electrical energy source, a third electrical energy sink that generates a third sink status signal, a third switch circuit that couples the additional electrical energy source and the third electrical energy sink and generates a third switch status signal, and a third control circuit that receives the third sink status signal from the third electrical energy sink, and generates a third switch control signal based on the third sink status signal, wherein the third control circuit controls the third switch circuit by means of the third switch control signal, and wherein the override control circuit receives the third switch status signal and generates a third switch override signal based on the third switch status signal that overrides the third switch control signal to control the third switch circuit if a third predetermined override condition is satisfied.

According to one aspect, the override control may further comprise a logic circuit that generates the first, second, and third switch override signals based on the first, second, and third switch status signals.

According to one aspect, the logic circuit may further receive first, second, and third mission-criticality signals to indicate whether the first, second, and third electrical energy sinks are performing a mission-critical operation, respectively, and wherein the logic circuit generates the first, second, and third switch override signals based on the first, second, and third mission-criticality signals.

According to one aspect, the logic circuit may include first, second, and third logic OR gates that generate first, second, and third switch override signals, respectively, based on the first, second, and third mission-criticality signals.

According to one aspect, the logic circuit may generate the first, second, and third switch override signals to maintain a predetermined number of first, second, and third electrical energy sinks coupled to the electrical energy source or the additional electrical energy source, respectively.

According to one aspect, the logic circuit may generate the first, second, and third switch override signals to maintain at least one of the first, second, or third electrical energy sinks coupled to the electrical energy source or the additional electrical energy source, respectively.

According to one aspect, the logic circuit may generate the first, second, and third switch override signals to limit decoupling of the first, second, and third electrical energy sinks from the electrical energy source or the additional electrical energy source, respectively, to a predetermined number of first, second, and third electrical energy sinks.

According to one aspect, the first switch circuit may include electrically-controlled switching means for coupling the electrical energy source and the first electrical energy sink, wherein the first switch override signal from the override control circuit directly controls the electrically-controlled switching means.

Preferably, the first switch override signal from the override control circuit directly controls the electrically-controlled switching means by decoupling the first control circuit from the electrically-controlled switching means.

According to one aspect, the electrically-controlled switching means are selected from the group consisting of a gate turn-off thyristor, a power metal-oxide field effect transistor, an insulated-gate bipolar transistor, an analog switch, a relay, and a solid-state relay.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative helicopter in accordance with some embodiments,
- Figure 2 is a diagram of an illustrative electrical system for a system application in accordance with some embodiments,
- Figure 3 is a diagram of multiple electrical systems coupled to an override control circuit in accordance with some embodiments,
- Figure 4 is a diagram of an illustrative electrical system showing details of a switch circuit in accordance with some embodiments,
- Figure 5 is a diagram of an illustrative logic circuit for an override control circuit that receives signals indicating when the system application is performing a mission-critical operation in accordance with some embodiments,
- Figure 6 is a diagram of an illustrative logic circuit for an override control circuit that maintains at least one energy sink coupled to an energy source in accordance with some embodiments,
- Figure 7 is a diagram of an illustrative logic circuit for an override control circuit that maintains at least two energy sinks coupled to their respective energy source in accordance with some embodiments, and
- Figure 8 is a diagram of an illustrative logic circuit for an override control circuit that allows the decoupling of at most one energy sink from its respective energy source in accordance with some embodiments.

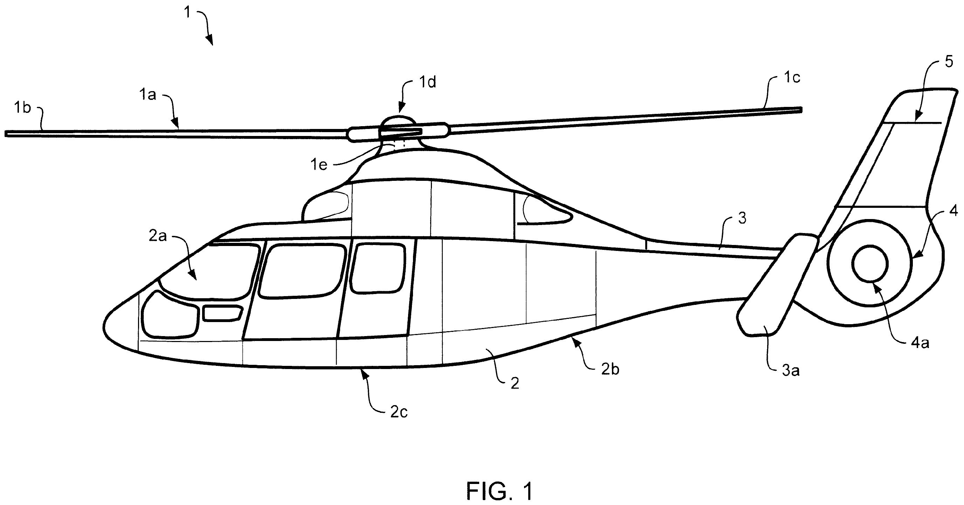

Exemplary embodiments may be included in any transportation vehicle. Figure 1 shows an example of a transportation vehicle. A transportation vehicle may be a spacecraft, an aircraft, a car, a bus, a truck, or a train, just to name a few. As shown in Figure 1, the transportation vehicle may be an aircraft 1 that is exemplarily illustrated as a rotary wing aircraft and, more particularly, as a helicopter. Thus, for purposes of simplicity and clarity, the rotary wing aircraft 1 is hereinafter referred to as the "helicopter" 1.

Illustratively, the helicopter 1 comprises a fuselage 2 that forms an airframe of the helicopter 1. The fuselage 2 is connected to a suitable landing gear and exemplarily forms a cabin 2a, a rear fuselage 2b, and a center fuselage 2c. The rear fuselage 2b is connected to a tail boom 3.

Illustratively, the helicopter 1 further comprises at least one multi-blade rotor 1a for providing lift and forward or backward thrust during operation. The at least one multi-blade rotor 1a comprises a plurality of rotor blades 1b, 1c that are mounted at an associated rotor head 1d to a rotor shaft 1e, which rotates in operation of the helicopter 1 around an associated rotor axis.

By way of example, the helicopter 1 may include at least one preferentially shrouded counter-torque device 4 configured to provide counter-torque during operation, i.e. to counter the torque created by rotation of the at least one multi-blade rotor 1a for purposes of balancing the helicopter 1 in terms of yaw. The at least one counter-torque device 4 is illustratively provided at an aft section of the tail boom 3 and may have a tail rotor 4a. The aft section of the tail boom 3 may include a fin 5. Illustratively, the tail boom 3 may be provided with a suitable horizontal stabilizer 3a.

Helicopter 1 may include system applications with electrical systems that perform safety-critical operations, which are sometimes also referred to as mission-critical operations. Examples for safety-critical operations performed by electrical systems in helicopter 1 may include controlling the helicopter's roll, pitch, yaw, and thrust.

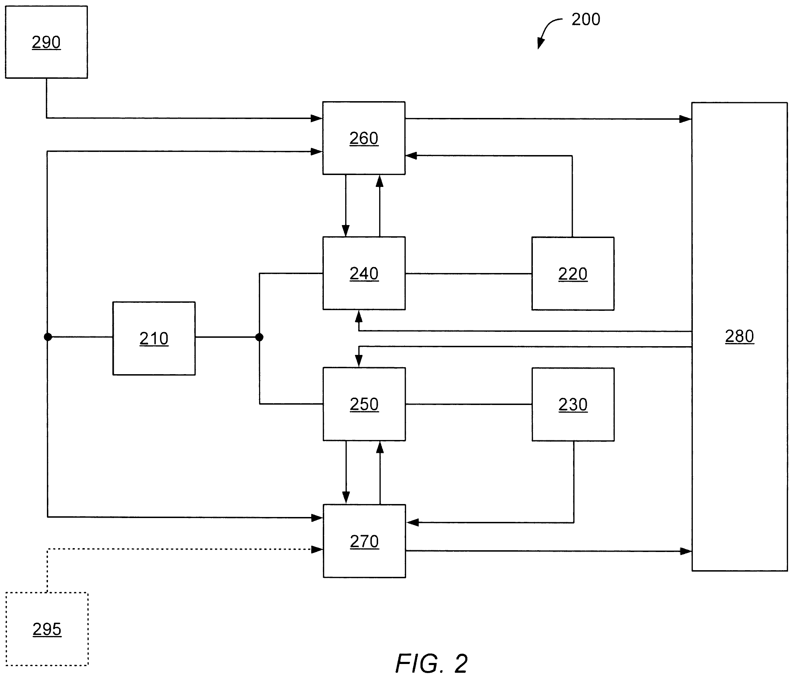

Figure 2 is a diagram of an illustrative electrical system for a system application in accordance with some embodiments. Electrical system 200 may include electrical energy source 210, electrical energy sinks 220, 230, switch circuits 240, 250, control circuits 260, 270, override control circuit 280, and operator switches 290, 295.

Electrical energy source 210 may be any apparatus able to provide electricity to electrical energy sinks 220 and 230. For example, electrical energy source 210 may be an electrical energy storage device such as a lithium ion rechargeable battery, a nickel cadmium rechargeable battery, a lithium ion polymer rechargeable battery, a nickel metal hydride battery, or any other rechargeable or non-rechargeable battery. If desired, electrical energy source 210 may be an electrical energy generation device such as a solar panel or an electrical power generator that is used in combination with a steam turbine, a gas turbine, a water turbine, a wind turbine, an internal combustion engine, or any other apparatus that provides mechanical power, which the electrical power generator converts into electrical power. In some embodiments, electrical energy source 210 may be an electrical power outlet that is coupled to the electricity grid.

A control function may monitor and assess the safety of electrical energy source 210 to determine whether electrical energy source 210 operates within safety margins. For example, the control function may monitor the discharge power, the depth of discharge, and/or the temperature of electrical energy source 210. As an example, the control function may determine that the temperature of electrical energy source 210 is outside a safe operating temperature range, and, as a consequence, electrical energy source 210 may incur the risk of a thermal runaway temperature that can lead to fire. If desired, electrical energy source 210 may generate a source status signal to indicate whether electrical energy source 210 is operating in a safe state or whether electrical energy source 210 is at risk of becoming a safety hazard.

Electrical energy sinks 220 and 230 may be any electrical component that transforms electrical energy into some other form of energy, which may include electrical energy, thermal energy, mechanical energy, electromagnetic energy, sound energy, chemical energy, or a combination thereof. For example, the electrical energy sinks 220 and/or 230 may include an electric motor that transforms electrical energy into mechanical energy, sound, and heat. As another example, the electrical energy sinks 220 and/or 230 may include a light bulb that transforms electrical energy into light and heat. Preferably, electrical energy sinks 220 and/or 230 perform safety-critical operations. As an example, electrical energy sinks 220, 230 may include an electrical actuator that sets the tilt of the rotor blades 1b, 1c of helicopter 1 of Figure 1, thereby controlling the roll and/or pitch of helicopter 1.

A control function may monitor and assess the safety of electrical energy sink 220 and/or 230 to determine whether electrical energy sink 220 and/or 230 operates within safety margins. For example, the control function may determine that the temperature of electrical energy sink 220 and/or 230 is outside a safe operating temperature range, and, as a consequence, the energy sink may overheat and ultimately fail. If desired, electrical energy sink 220 and/or 230 may generate a respective sink status signal to indicate whether electrical energy sink 220 and/or 230 is operating in a safe state or whether electrical energy sink 220 and/or 230 is at risk of becoming a safety hazard.

As shown in Figure 2, switch circuit 240 and 250 may couple or decouple electrical energy source 210 and electrical energy sinks 220 and 230, respectively. Switch circuits 240 and 250 may include any electrically controlled switch. For example, switch circuits 240 and/or 250 may include a gate turn-off thyristor, a power metal-oxide field effect transistor, an insulated-gate bipolar transistor, an analog switch, a relay, or a solid-state relay.

If desired, switch circuits 240 and/or 250 may generate switch status signals to indicate whether the respective electrically controlled switch is open (i.e., energy source 210 is decoupled from electrical energy sinks 220 and/or 230) or closed (i.e., energy source 210 is coupled to electrical energy sinks 220 and/or 230). Switch circuits 240 and 250 may send the switch status signals (e.g., whether the respective electrically controlled switch is open or closed) to control circuits 260 and 270, respectively. Control circuits 260 and 270 may forward the switch status signals from switch circuits 240 and 250 to override control circuit 280. If desired, switch circuits 240 and 250 may send the switch status signals to override control circuit 280 directly.

Control circuits 260 and 270 may receive a source status signal from electrical energy source 210. In response to receiving a source status signal, control circuits 260 and 270 may generate switch control signals that control the switch circuits 240 and 250, respectively, by means of the respective switch control signal. For example, in response to receiving a source status signal that is indicative of a hazardous condition that may lead to a failure of electrical energy source 210, control circuits 260 and 270 may generate switch control signals that cause switch circuit 240 and/or 250 to decouple electrical energy sink 220 and/or 230 from electrical energy source 210.

Control circuits 260 and 270 may receive a respective sink status signal from electrical energy sink 220 and 230, respectively. In response to receiving a sink status signal, control circuits 260 and 270 may generate switch control signals that control the switch circuits 240 and 250, respectively, by means of the respective switch control signal. For example, in response to receiving a sink status signal from electrical energy sink 220 that is indicative of a hazardous condition that may lead to a failure of electrical energy sink 220, control circuit 260 may generate a switch control signal that causes switch circuit 240 to decouple electrical energy sink 220 from electrical energy source 210. As another example, in response to receiving a sink status signal from electrical energy sink 230 that is indicative of a hazardous condition that may lead to a failure of electrical energy sink 230, control circuit 270 may generate a switch control signal that causes switch circuit 250 to decouple electrical energy sink 230 from electrical energy source 210.

Override control circuit 280 may receive the switch status signals indicative of the switch status of switch circuits 240 and 250. For example, override control circuit 280 may receive the switch status signals from switch circuits 240 and 250 via control circuits 260 and 270, respectively, or from switch circuits 240 and 250 directly, if desired. Override control circuit 280 may generate a first switch override signal based on the switch status signal from switch circuit 240 if a first predetermined override condition is satisfied. The first switch override signal may override the switch control signal that controls switch circuit 240. If desired, override control circuit 280 may generate a second switch override signal based on the switch status signal from switch circuit 250 if a second predetermined override condition is satisfied. The second switch override signal may override the switch control signal that controls switch circuit 250.

In some embodiments, electrical energy sink 220 and/or 230 may perform safety-critical operations. Electrical energy sink 220 and/or 230 may perform safety-critical operations under predetermined circumstances (e.g., when operating under certain conditions), at predetermined times (e.g., at predetermined time intervals), or exclusively (i.e., under any condition and at all times). If desired, the first and second predetermined override conditions may be based on whether electrical energy sink 220 and 230, respectively, are performing a safety-critical operation.

According to one aspect, electrical system 200 may include an operator switch 290. A user may interact with electrical system 200 via operator switch 290. Operator switch 290 may generate a desired switch status signal and send the desired switch status signal to control circuit 260. If desired, operator switch 290 may send the same desired switch status signal to control circuit 270. Alternatively, operator switch 290 may generate an additional desired switch status signal and send the additional desired switch status signal to control circuit 270. In some embodiments, electrical system 200 may include an additional, optional operator switch 295 that generates the desired switch status signal that is sent to control circuit 270. In response to receiving a desired switch status signal, control circuit 260, 270 may generate a corresponding switch control signal.

In some embodiments, the desired switch status signal may have a higher priority than the source status signal and/or the sink status signal. In other words, a desired switch status signal supersedes the source status signal and/or the sink status signal, and the control circuit maintains electrical energy source and sink coupled if this is indicated by the desired switch status signal even though the source and/or sink status signal indicates that the electrical energy source and sink should be decoupled.

In other embodiments, the desired switch status signal may have a lower priority than the source status signal and/or the sink status signal. In other words, a desired switch status signal is overridden by the source status signal and/or the sink status signal, and the control circuit decouples the electrical energy source and sink if this is indicated by the source or sink status signal, even though the desired switch status signal indicates that the electrical energy source and sink should be coupled.

The switch override signal from override control circuit 280 may have a higher priority than the desired switch status signal, the source status signal, and the sink status signal.

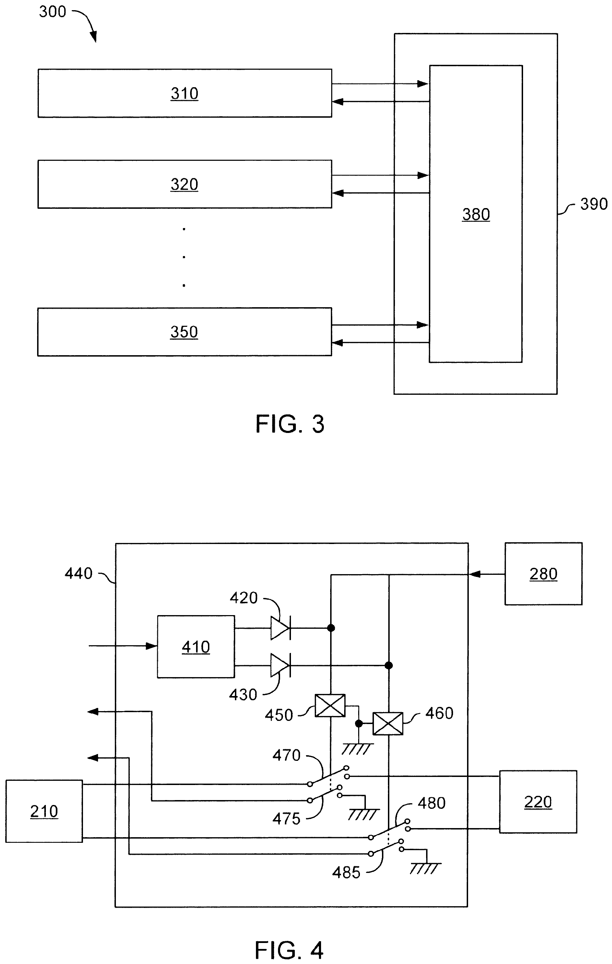

In some embodiments, a system application may include more than one electrical system, and the override control circuit may generate switch override signals that override the switch control signals to control the switch circuits in more than one electrical system. Figure 3 is a diagram of multiple electrical systems coupled to an override control circuit in accordance with some embodiments. As shown, system application 300 may include electrical systems 310, 320, ..., 350 that are each coupled to override control circuit 390.

Each of electrical systems 310, 320, ... 350 may have at least one electrical energy source, at least one electrical energy sink, a switch circuit between the at least one electrical energy source and the at least one electrical energy sink, and a control circuit that receives status information from the at least one electrical energy source and/or the at least one electrical energy sink. The control circuit may generate a switch control signal based on the sink status signal that controls the switch circuit by means of the switch control signal. The switch circuit may generate a switch status signal indicative of whether the at least one electrical energy source is coupled to or decoupled from the at least one electrical energy sink.

Each electrical system 310, 320, ..., 350 may send a switch status signal to override control circuit 390. If desired, override control circuit 390 may include logic circuit 380 that receives the switch status signals from electrical systems 310, 320, ..., 350. Logic circuit 380 may generate switch override signals based on the switch status signals and send the switch override signals to electrical systems 310, 320, ..., 350.

For example, logic circuit 380 may generate override signals such that at least a predetermined number of electrical systems 310, 320, ..., 350 have their at least one electrical energy sink coupled to their at least one electrical energy source. As another example, logic circuit 380 may generate override signals such that at most a predetermined number of electrical systems 310, 320, ..., 350 have their at least one electrical energy sink decoupled from their at least one electrical energy source.

In some embodiments, logic circuit 380 may receive mission-criticality signals to indicate whether the respective electrical energy sink is performing a mission-critical operation. As an example, logic circuit 380 may receive mission-criticality signals from the electrical energy sinks. If desired, logic circuit 380 may receive mission-criticality signals generated by any sources. For example, a flight control system, one or more sensors, or manual action (e.g., an operator) may generate the mission-criticality signals. If desired, logic circuit 380 may generate the switch override signals based on the mission-criticality signals. For example, logic circuit 380 may maintain all mission-critical electrical energy sinks coupled to their respective electrical energy sources. As another example, logic circuit 380 may maintain at least a minimum number of mission-critical electrical energy sinks coupled to their respective electrical energy sources. If desired, logic circuit 380 may allow at least a maximum number of mission-critical electrical energy sinks to be decoupled from their respective electrical energy sources.

Figure 4 is a diagram of an illustrative electrical system showing details of a switch circuit in accordance with some embodiments. As shown, switch circuit 440 may couple electrical energy source 210 and electrical energy sink 220, receive a switch override signal from override control circuit 280, and a switch control signal from a control circuit. Switch circuit 440 may generate one or more switch status signals and provide the one or more switch status signals to the control circuit and/or to override control circuit 280.

Switch circuit 440 may include one or two electrically-controlled switching means (e.g., a gate turn-off thyristor, a power metal-oxide field effect transistor, an insulated-gate bipolar transistor, an analog switch, a relay, or a solid-state relay, or a combination thereof, just to name a few) that couple electrical energy source 210 and electrical energy sink 220.

As shown in Figure 4, switch circuit 440 may include two relays, a first relay having contactor coil 450 and switches 470 and 475, and a second relay having contactor coil 460 and switches 480 and 485. If desired, the second relay having contactor coil 460 and switches 480 and 485 may be omitted. Switches 470 and 480 may couple electrical energy source 210 and electrical energy sink 220 and switches 475 and 485 may generate a switch status signal. In some embodiments, switches 470 and/or 480 may have a separate contactor coil from switches 475 and/or 485, respectively.

In the example of Figure 4, switches 470 and 475 may be closed (i.e., coupling electrical energy sink 220 with electrical energy source 210) when a current flows through contactor coil 450 and open (i.e., decoupling electrical energy sink 220 from electrical energy source 210) when no current flows through contactor coil 450. If desired, switch 470 and/or switch 475 may be open when a current flows through contactor coil 450 and closed when no current flows through contactor coil 450. Similarly, switches 480 and 485 may be closed (i.e., coupling electrical energy sink 220 with electrical energy source 210) when a current flows through contactor coil 460 and open (i.e., decoupling electrical energy sink 220 from electrical energy source 210) when no current flows through contactor coil 460. If desired, switch 480 and/or switch 485 may be open when a current flows through contactor coil 460 and closed when no current flows through contactor coil 460.

Preferably, switches 470 and 480 are both closed or both open when a current flows through contactor coils 450 and 460, and switches 475 and 485 are both closed or both open when a current flows through contactor coils 450 and 460. For purposes of simplicity and clarity, the switches 470, 475, 480, and 485 are closed when a current flows through contactor coils 450 and 460 and open when no current flows through contactor coils 450 and 460. In other words, applying logical '1' at the input of contactor coils 450 and 460 closes switches 470, 475, 480, and 485, while applying logical '0' at the input of contactor coils 450 and 460 opens switches 470, 475, 480, and 485.

Contactor driver 410 may receive a switch control signal from the control circuit and generate the appropriate signals that act on contactor coils 450 and 460 via diodes 420 and 430, respectively. As an example, consider the scenario in which contactor driver 410 receives a switch control signal that indicates that the switches 470 and 480 should be closed. In this scenario, contactor driver 410 may generate a logical '1' and apply the logical '1' via diodes 420 and 430 at the input of contactor coils 450 and 460, respectively. In response to receiving a logical '1', contactor coils 450 and 460 may close switches 470, 475 and 480, 485, respectively, thereby coupling electrical energy sink 220 with electrical energy source 210 and generating a switch status signal that is logical '0'.

If desired, switch circuit 440 may generate a switch status signal that is logical '1' when the switches 475 and 485 are closed. For example, an inverter may invert the switch status signal before transmitting the signal to the control circuit and/or the override control circuit. As another example, the control circuit and/or the override control circuit may include an inverter that inverts the switch status signal from switch circuit 440. For purposes of simplicity and clarity, we assume for the remainder of this application that the logic circuit in the override control circuit (e.g., logic circuit 380 of override control circuit 390 of Figure 3) receives a switch status signal that is logical '0' when switches 470 and 480 are open and logical '1' when switches 470 and 480 are closed. We further assume for the remainder of this application that switches 470 and 480 are being closed when the switch override signal from the override control circuit provides a logical '1'.

Consider the scenario in which the control circuit receives a source status signal and/or a sink status signal that indicates that the electrical energy source 210 and/or the electrical energy sink 220 are at risk of failure. In this scenario, contactor driver 410 may receive a switch control signal that indicates that the switches 470 and 480 should be opened. Contactor driver 410 may generate a logical '0' and apply the logical '0' via diodes 420 and 430 at the input of contactor coils 450 and 460, respectively. In response to receiving a logical '0', contactor coils 450 and 460 may open switches 470, 475 and 480, 485, respectively, thereby decoupling electrical energy sink 220 from electrical energy source 210.

As a result, override control circuit 280 may receive a switch status signal that indicates that electrical energy sink 220 is decoupled from electrical energy source 210. If desired, override control circuit 280 may receive a signal indicating that electrical energy sink 220 is performing a mission-critical operation. In response to receiving a signal indicating that electrical energy sink 220 is not performing a mission-critical operation, override control circuit may generate a logical '0' that is applied to the input of contactor coils 450 and 460 such that switches 470 and 480 remain open. In response to receiving a signal indicating that electrical energy sink 220 is performing a mission-critical operation, override control circuit may generate a logical '1' that is applied to the input of contactor coils 450 and 460 such that switches 470 and 480 are closed. Thus, override control circuit 280 may override the switch control signal and directly control switches 470 and 480 via contactor coils 450 and 460.

Diodes 420 and 430 may prevent that the logical '1' from override control circuit 280 is reverse flowing via contactor driver 410. If desired, the path from override control circuit 280 to the node at which the input from override control circuit 280 is coupled with the output of diodes 420, 430 may include (e.g., at the output of override control circuit 280 or at the input to switch circuit 440 from override control circuit 280) a diode to prevent the reverse flow of a logical '1' from contactor driver 410 via override control circuit 280 in the event that override control circuit 280 generates a logical '0'.

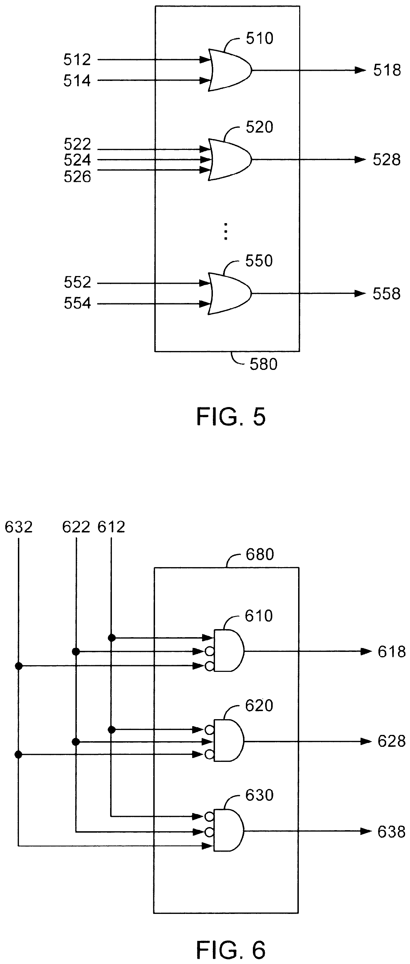

Figure 5 is a diagram of an illustrative logic circuit (e.g., logic circuit 380 of Figure 3) for an override control circuit (e.g., override control circuit 390 of Figure 3) that receives signals indicating when a system application is performing a mission-critical operation in accordance with some embodiments.

As shown, logic circuit 580 may include logic OR gates 510, 520, ..., 550. Each logic OR gate 510, 520, ..., 550 may be associated with a system application, receive mission-criticality signals indicating whether the corresponding system application is performing a mission-critical operation, and generate switch override signals 518, 528, ..., 558, respectively, for the switch circuit or the switch circuits of the corresponding system application. A system application may provide one or more mission-criticality signals. For example, a system application may include several electrical energy sinks and some or all electrical energy sinks in the system application may generate a mission-criticality signal indicating whether the electrical energy sink is involved in a mission-critical operation, if desired. A mission-criticality signal may be logical '1' when the corresponding electrical energy sink is performing a mission-critical operation and logical '0' otherwise.

As shown in Figure 5, logic OR gate 510 may receive mission-criticality signal 512 and partial switch override signal 514, logic OR gate 520 mission-criticality signal 522 and partial switch override signals 524, and 526, ..., and logic OR gate 550 mission-criticality signal 552 and partial switch override signal 554. Partial switch override signals 514, 524, 526, 554 may be generated by an additional logic circuit such as one of the logic circuits shown in Figures 6, 7, or 8, as an example.

Thus, logic OR gate 510 may generate switch override signal 518 that is logical '0' as long as both signals 512 and 514 are logical '0'. Similarly, logic OR gate 520 may generate switch override signal 528 that is logical '0' as long as all three signals 522, 524, and 526 are logical '0', and logic OR gate 550 may generate switch override signal 558 that is logical '0' as long as both signals 552 and 554 are logical '0'.

Logic OR gate 510 may generate switch override signal 518 that is logical '1' when at least one of the two signals 512 and 514 is logical '1'. Similarly, logic OR gate 520 may generate switch override signal 528 that is logical '1' when at least one of the three signals 522, 524, and 526 is logical '1', and logic OR gate 550 may generate switch override signal 558 that is logical '1' when at least one of the two signals 552 and 554 is logical '1'.

As an example, the electrical energy sink associated with mission-criticality signal 512 is performing a mission-critical operation. In this scenario, logic OR gate 510 may receive logical '1' through mission-criticality signal 512 and, in response, generate switch override signal 518 that is logical '1'. If desired, the switch override signal 518 may be applied directly to the electrically-controlled switches in the system application, thereby overriding any switch control signal and ensuring that the corresponding electrical energy sink that is performing the mission-critical operation stays coupled to the corresponding electrical energy source.

In some embodiments, the override control circuit may generate more than one switch override signal for a system application, whereby each switch override signal may control an individual electrically-controlled switch in the system application. For example, an electrical energy sink in a system application with multiple electrical energy sinks may generate a mission-criticality signal indicating whether the electrical energy sink is involved in a mission-critical operation. The override control circuit may generate a switch override signal that is applied directly and exclusively to the electrically-controlled switch that couples the electrical energy sink to a corresponding electrical energy source, thereby ensuring that the corresponding electrical energy sink that is performing the mission-critical operation stays coupled to the corresponding electrical energy source.

In some embodiments, the switch override signal may depend only on the mission-criticality signal. For example, switch override signal 518 may only depend on mission-criticality signal 512. In this example, the logic circuit generating the switch override signal may be simplified. For example, the logic circuit may receive the mission-criticality signal 512, output the switch override signal 518, and include a wire, a buffer, or an even number of inverters, just to name a few possible implementations.

Figure 6 is a diagram of an illustrative logic circuit (e.g., logic circuit 380 of Figure 3) for an override control circuit (e.g., override control circuit 390 of Figure 3) that maintains at least one electrical energy sink coupled to an electrical energy source in accordance with some embodiments. Logic circuit 680 may include logic AND gates 610, 620, 630, each having three inputs out of which two are inverted, that generate switch override signals 618, 628, 638, respectively, based on switch status signals 612, 622, 632.

In some embodiments, each of three electrical systems may have an electrical energy source, an electrical energy sink, a control circuit, and a switch circuit that couples the electrical energy sink and the electrical energy source and generates a switch status signal. Switch override signal 618 may control the switch circuit that generates switch status signal 612, switch override signal 628 the switch circuit that generates switch status signal 622, switch override signal 638 the switch circuit that generates switch status signal 632.

Consider the scenario in which at least one of the three electrical energy sinks needs to continue operating and therefore be coupled to the corresponding electrical energy source. Consider further that the switch status signal is logical '1' when the electrical energy sink is coupled to the electrical energy source, that the switch status is logical '0' when the electrical energy sink is decoupled from the electrical energy source, and that a switch override signal that is logical '1' closes the switch between electrical energy sink and electrical energy source. In this scenario, each logic AND gate may receive the switch status signal from the switch circuit that it controls at the non-inverted input and the switch status signal from the two switch circuits that it does not control at the two inverted inputs. In other words, logic AND gate 610 may receive switch status signal 612 and the inversion of switch status signals 622 and 632, logic AND gate 620 may receive switch status signal 622 and the inversion of switch status signals 612 and 632, and logic AND gate 630 may receive switch status signal 632 and the inversion of switch status signals 612 and 622.

Thus, switch override signal 618 may be logical '1' and switch override signals 628 and 638 logical '0' when switch status signal 612 is logical '1' and switch status signals 622 and 632 logical '0'. In other words, switch override signal 618 keeps the corresponding switch circuit closed, thereby coupling the corresponding electrical energy sink to the corresponding electrical energy source when both switch circuits controlled by switch override signals 628 and 638 have their electrical energy sinks decoupled from their electrical energy sources. Similarly, switch override signal 628 may be logical '1' and switch override signals 618 and 638 logical '0' when switch status signal 622 is logical '1' and switch status signals 612 and 632 logical '0', and switch override signal 638 may be logical '1' and switch override signals 618 and 628 logical '0' when switch status signal 632 is logical '1' and switch status signals 612 and 622 logical '0'. In other words, switch override signal 628 keeps the corresponding switch circuit closed, thereby coupling the corresponding electrical energy sink to the corresponding electrical energy source when both switch circuits controlled by switch override signals 618 and 638 have their electrical energy sinks decoupled from their electrical energy sources, and switch override signal 638 keeps the corresponding switch circuit closed, thereby coupling the corresponding electrical energy sink to the corresponding electrical energy source when both switch circuits controlled by switch override signals 618 and 628 have their electrical energy sinks decoupled from their electrical energy sources. Hence, at least one electrical energy sink remains coupled to the corresponding electrical energy source at all times.

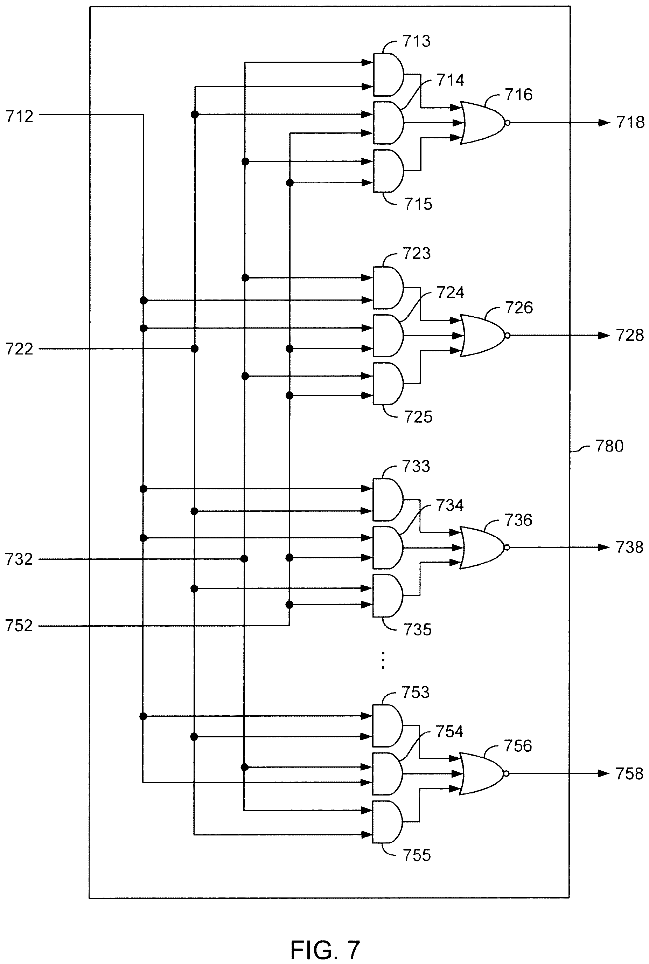

Figure 7 is a diagram of an illustrative logic circuit for an override control circuit that maintains at least two electrical energy sinks coupled to their respective electrical energy sources in accordance with some embodiments. Logic circuit 780 may include a first stage of logic AND gates 713, 714, 715, 723, 724, 725, 733, 734, 735, ..., 753, 754, 755 and a second stage of logic NOR gates 716, 726, 736, ..., 756.

The first stage of logic AND gates may receive switch status signals 712, 722, 732, ..., 752 and perform logical AND operations of each pair of switch status signals. Thus, n(n-1)/2 two-input logic AND gates are required for n inputs in the first stage of logic AND gates. For example, three two-input logic AND gates are required for three switch status signals, six two-input logic AND gates are required for four switch status signals, 10 two-input logic AND gates are required for five switch status signals, etc.

Thus, six two-input logic AND gates are required for the four switch status signals shown in Figure 7. For purposes of simplicity and clarity, Figure 7 includes 12 two-input logic AND gates such that each logic NOR gate is associated with the logic AND gate from which it depends. As can easily be seen in Figure 7, logic AND gates 713 and 755, logic AND gates 715 and 725, logic AND gates 723 and 754, logic AND gates 714 and 735, logic AND gates 724 and 734, and logic AND gates 733 and 753 are performing the same operations on the same signals. Thus, one of logic AND gates 713 and 755, one of logic AND gates 715 and 725, one of logic AND gates 723 and 754, one of logic AND gates 714 and 735, one of logic AND gates 724 and 734, and one of logic AND gates 733 and 753 gates may be omitted and the output of the remaining logic AND gate may be connected accordingly. For example, logic AND gate 713 may be omitted and the output of logic AND gate 755 connected to the input of logic NOR gate 716, logic AND gate 715 may be omitted and the output of logic AND gate 725 connected to the input of logic NOR gate 716, etc.

Switch override signal 718, 728, 738, ..., 758 may control the switch that generates switch status signals 712, 722, 732, ..., 752, respectively. In other words, switch override signal 718 may control the switch that generates switch status signal 712, switch override signal 728 the switch that generates switch status signal 722, switch override signal 738 the switch that generates switch status signal 732, ..., and switch override signal 758 the switch that generates switch status signal 752.

Logic NOR gates 716, 726, 736, ..., 756 may generate switch override signals 718, 728, 738, ..., 758, respectively, based on the signals received from the logic AND gates, which perform pairwise logical AND operations of the switch status signals from the switch circuits not controlled by the respective logic NOR gate. For example, logic NOR gate 716 may generate switch override signal 718 based on the signals received from logic AND gates 713, 714, and 715, which may perform logical AND operations of switch status signals 722 and 732, 722 and 752, and 732 and 752. Similarly, logic NOR gate 726 may generate switch override signal 728 based on the signals received from logic AND gates 723, 724, and 725, which may perform logical AND operations of switch status signals 712 and 732, 712 and 752, and 732 and 752. Logic NOR gate 736 may generate switch override signal 738 based on the signals received from logic AND gates 733, 734, and 735, which may perform logical AND operations of switch status signals 712 and 722, 712 and 752, and 722 and 752. Logic NOR gate 756 may generate switch override signal 758 based on the signals received from logic AND gates 753, 754, and 755, which may perform logical AND operations of switch status signals 712 and 722, 712 and 732, and 722 and 732.

For purposes of illustration, the switch status signal is logical '1' when the electrical energy sink is coupled to the electrical energy source and logical '0' when the electrical energy sink is decoupled from the electrical energy source. Furthermore, a switch override signal that is logical '1' closes the switch between electrical energy sink and electrical energy source, and a switch override signal that is logical '0' has no influence on the switch circuit.

For example, consider the scenario in which all electrical energy sinks are coupled to the corresponding electrical energy source. In this scenario, switch status signals 712, 722, 732, ..., 752 are logical '1', the output of each logic AND gate is also logical '1', and the switch override signals are all logical '0'.

As another example, consider the scenario in which at least three electrical energy sinks are coupled to the corresponding electrical energy source. Consider further, as an example, that the switch circuit that produces switch status signal 712 decouples an electrical energy sink from the corresponding electrical energy source. Thus, switch status signal 712 may be logical '0' and switch status signals 722, 732, ..., and 752 logical '1'. In this scenario, logic AND gates 723, 724, 733, 734, ..., 753, and 754 may generate a logical '0', while all other logic AND gates (i.e., logic AND gates 713, 714, 715, 725, 735, ..., and 755) may generate a logical '1', and the switch override signals are all logical '0'.

As yet another example, consider the scenario in which at least two electrical energy sinks are coupled to the corresponding electrical energy source. Consider further, as an example, that the switch circuits that produce switch status signals 712 and 722 decouple an electrical energy sink from the corresponding electrical energy source. Thus, switch status signals 712 and 722 may be logical '0' and switch status signals 732, ..., and 752 logical '1'. In this scenario, logic AND gates 713, 714, 723, 724, 733, 734, 735, ..., 753, 754, and 755 may generate a logical '0', while logic AND gates 715, 725 generate a logical '1'. Thus, switch override signals 718 and 728 are logical '0', while switch override signals 738 and 758 are logical '1'. In other words, switch override signals 738 and 758 keep the corresponding switch circuits closed, thereby coupling the corresponding electrical energy sinks to the corresponding electrical energy sources when the switch circuits controlled by switch override signals 738 and 758 are the only ones having their electrical energy sinks coupled to their electrical energy sources. Hence, at least two electrical energy sink remains coupled to the corresponding electrical energy source at all times.

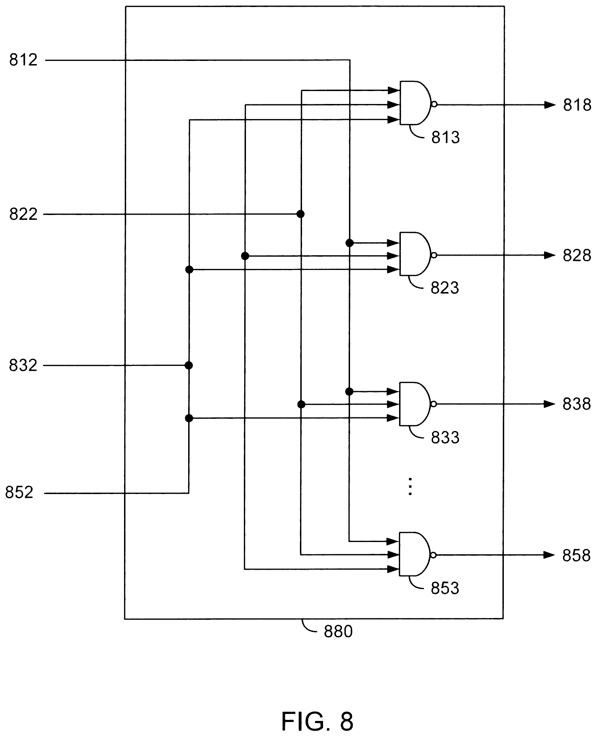

Figure 8 is a diagram of an illustrative logic circuit for an override control circuit that allows the decoupling of at most one energy sink from its respective energy source in accordance with some embodiments.

Switch override signal 818, 828, 838, ..., 858 may control the switch that generates switch status signals 812, 822, 832, ..., 852, respectively. In other words, switch override signal 818 may control the switch that generates switch status signal 812, switch override signal 828 the switch that generates switch status signal 822, switch override signal 838 the switch that generates switch status signal 832, ..., and switch override signal 858 the switch that generates switch status signal 852.

Logic circuit 880 may include logic NAND gates 813, 823, 833, ..., 853 that generate switch override signals 818, 828, 838, ..., 858, respectively, based on the switch status signals from the switch circuits not controlled by the respective logic NAND gate.

For example, logic NAND gate 813 may perform a logical NAND operation of switch status signals 822, 832, and 852. Similarly, logic NAND gate 823 may perform a logical NAND operation of switch status signals 812, 832, and 852, logic NAND gate 833 may perform a logical NAND operation of switch status signals 812, 822, and 852, and logic NAND gate 853 may perform a logical NAND operation of switch status signals 812, 822, and 832.

Thus, n (n-1)-input logic NAND gates are required for n inputs into the stage of logic NAND gates. For example, three two-input logic NAND gates are required for three switch status signals, four three-input logic NAND gates are required for four switch status signals, five four-input logic NAND gates are required for five switch status signals, etc. Thus, four three-input logic NAND gates are required for the four switch status signals shown in Figure 8.

For purposes of illustration, the switch status signal is logical '1' when the electrical energy sink is coupled to the electrical energy source and logical '0' when the electrical energy sink is decoupled from the electrical energy source. Furthermore, a switch override signal that is logical '1' closes the switch between electrical energy sink and electrical energy source, and a switch override signal that is logical '0' has no influence on the switch circuit.

For example, consider the scenario in which all electrical energy sinks are coupled to the corresponding electrical energy source. In this scenario, switch status signals 812, 822, 832, ..., 852 are logical '1', the output of each logic NAND gate is logical '0', and the switch override signals are all logical '0'.

As another example, consider the scenario in which at most one electrical energy sinks is decoupled from the corresponding electrical energy source. Consider further, as an example, that the switch circuit that produces switch status signal 812 decouples an electrical energy sink from the corresponding electrical energy source. Thus, switch status signal 812 may be logical '0' and switch status signals 822, 832, ..., and 852 logical '1'. In this scenario, logic NAND gates 823, 833, ..., and 853 may generate a logical '1', while logic NAND gates 813 may generate a logical '0'. In other words, switch override signals 828, 838, and 858 keep the corresponding switch circuits closed, thereby coupling the corresponding electrical energy sinks to the corresponding electrical energy sources when at most one switch circuit (i.e., the switch circuit that provides switch status signal 812) is having an electrical energy sink decoupled from the corresponding electrical energy sources. Hence, at most one electrical energy sink becomes decoupled from the corresponding electrical energy source.

It should be noted that the above described embodiments are merely described to illustrate possible realizations of the present invention, but not in order to restrict the present invention thereto. Instead, multiple modifications and variations of the invention are possible and should, therefore, also be considered as being part of the invention.

By way of example, the electrical system 200 of Figure 2 may have a single electrical energy sink, a single control circuit, and a single switch circuit. For example, electrical energy sink 230, switch circuit 250, and control circuit 270 may be omitted. Furthermore, the logic circuit 680 of Figure 6 may generate switch override signals for a number of switch circuits that is different than three. The logic circuits shown in Figures 5, 6, 7, and 8 may be implemented differently, for example by inverting some or all signals. If desired, the logic circuit of Figure 5 may be combined with the logic circuits of Figures 6, 7, or 8. For example, a combination of Figures 5 and 6 may result in generating a switch override signal that is logical '1', when the corresponding electrical energy sink is performing a mission-critical operation or when the corresponding electrical energy sink is the only one still coupled to an electrical energy source. Moreover, the control circuit may provide a desired switch status signal to the override control circuit so that the override control circuit generate a switch override signal that keeps the corresponding switch closed before it is opened, thereby preventing a glitch in which the switch is first opened and then closed again.

### Reference List

1 rotary wing aircraft
1a multi-blade rotor
1b, 1c rotor blades
1d rotor head
1e rotor shaft
2 fuselage
2a cabin
2b rear fuselage
2c center fuselage
3 tail boom
3a horizontal stabilizer
4 counter-torque device
4a tail rotor
5 fin
200 electrical system
210 electrical energy source
220, 230 electrical energy sink
240, 250 switch circuit
260, 270 control circuit
280 override control circuit
290, 295 operator switch
300 system application
310, 320, 350 electrical system
380 logic circuit
390 override control circuit
410 contactor driver
420, 430 diode
440 switch circuit
450, 460 contactor coil
470, 475, 480, 485 switch
510, 520, 550 logic OR gate
512, 522, 552 mission-criticality signal
514, 524, 526, 554 partial switch override signal
518, 528, 558 switch override signals
580 logic circuit
610, 620, 630 logic AND gate
612, 622, 632 switch status signal
618, 628, 638 switch override signal
680 logic circuit
712, 722, 732, 752 switch status signal
713, 714, 715, 723, 724, 725, 733, 734, 735, 753, 754, 755 logic AND gate
716, 726, 736, 756 logic NOR gate
718, 728, 738, 758 switch override signal
780 logic circuit
812, 822, 832, 852 switch status signal
813, 823, 833, 853 logic NAND gate
818, 828, 838, 858 switch override signal
880 logic circuit

## Claims

1. An electrical system (200), comprising:
an electrical energy source (210);
a first electrical energy sink (220) that generates a first sink status signal indicating a safe state of operation or a risk of becoming a safety hazard;
a second electrical energy sink (230) that generates a second sink status signal indicating a safe state of operation or a risk of becoming a safety hazard;
a first switch circuit (240) that couples the electrical energy source (210) to the first electrical energy sink (220) and generates a first switch status signal;
a second switch circuit (250) that couples the electrical energy source (210) to the second electrical energy sink (230) and generates a second switch status signal;
a first control circuit (260) that receives the first sink status signal from the first electrical energy sink (220), and generates a first switch control signal based on the first sink status signal, wherein the first control circuit controls the first switch circuit (240) by means of the first switch control signal;
a second control circuit (270) that receives the second sink status signal from the second electrical energy sink (230), and generates a second switch control signal based on the second sink status signal, wherein the second control circuit controls the second switch circuit (250) by means of the second switch control signal; and **characterised by**
an override control circuit (280) that receives the first and second switch status signals, generates a first switch override signal based on the first switch status signal that overrides the first switch control signal to control the first switch circuit (240) if a first predetermined override condition is satisfied, the first predetermined override condition being based on whether the first electrical energy sink (220) is performing a safety-critical operation under predetermined circumstances, and generates a second switch override signal based on the second switch status signal that overrides the second switch control signal to control the second switch circuit (250) if a second predetermined override condition is satisfied, the second predetermined override condition being based on whether the second electrical energy sink (230) is performing a safety-critical operation under predetermined circumstances.

2. The electrical system of claim 1, wherein the first control circuit (260) routes the first switch status signal from the first switch circuit (240) to the override control circuit (280) and wherein the second control circuit (270) routes the second switch status signal from the second switch circuit (250) to the override control circuit (280).

3. The electrical system of claim 1, wherein a transportation vehicle (1) includes the first electrical energy sink (220), and wherein the first electrical energy sink is a mission-critical electrical component of the transportation vehicle that satisfies the first predetermined override condition.

4. The electrical system of claim 3, wherein the transportation vehicle (1) is selected from a group consisting of a spacecraft, an aircraft, a car, a bus, a truck, and a train.

5. The electrical system of claim 1, wherein the electrical energy source (210) generates a source status signal, wherein the first control circuit (260) receives the source status signal from the electrical energy source (210) and generates the first switch control signal based on the first sink status signal and the source status signal, and wherein the second control circuit (270) receives the source status signal from the electrical energy source (210) and generates the second switch control signal based on the second sink status signal and the source status signal.

6. The electrical system of claim 5, further comprising:
an operator switch (290) that generates a first desired switch status signal and sends the first desired switch status signal to the first control circuit (260).

7. The electrical system of claim 6, wherein the first control circuit (260) generates the first switch control signal based on the first sink status signal and the source status signal and the first desired switch status signal.

8. The electrical system of claim 7, wherein the first sink status signal and the source status signal have priority over the first desired switch status signal.

9. The electrical system of claim 1, further comprising:
an additional electrical energy source;
a third electrical energy sink that generates a third sink status signal;
a third switch circuit that couples the additional electrical energy source and the third electrical energy sinks and generates a third switch status signal; and
a third control circuit that receives the third sink status signal from the third electrical energy sink, and generates a third switch control signal based on the third sink status signal, wherein the third control circuit controls the third switch circuit by means of the third switch control signal, and wherein the override control circuit receives the third switch status signal and generates a third switch override signal based on the third switch status signal that overrides the third switch control signal to control the third switch circuit if a third predetermined override condition is satisfied.

10. The electrical system of claim 9, wherein the override control circuit (390) further comprises:
a logic circuit (380) that generates the first, second, and third switch override signals based on the first, second, and third switch status signals.

11. The electrical system of claim 10, wherein the logic circuit (580) further receives first, second, and third mission-criticality signals (512, 522, 552) to indicate whether the first, second, and third electrical energy sinks are performing a mission-critical operation, respectively, and wherein the logic circuit generates the first, second, and third switch override signals (518, 528, 558) based on the first, second, and third mission-criticality signals.

12. The electrical system of claim 11, wherein the logic circuit further comprises:
first, second, and third logic OR gates (510, 520, 550) that generate first, second, and third switch override signals (518, 528, 558), respectively, based on the first, second, and third mission-criticality signals (512, 522, 552).

13. The electrical system of claim 10, wherein the logic circuit generates the first, second, and third switch override signals to maintain a predetermined number of first, second, and third electrical energy sinks coupled to the electrical energy source or the additional electrical energy source, respectively.

14. The electrical system of claim 13, wherein the logic circuit (680) generates the first, second, and third switch override signals (618, 628, 638) to maintain at least one of the first, second, or third electrical energy sinks coupled to the electrical energy source or the additional electrical energy source, respectively.

15. The electrical system of claim 10, wherein the logic circuit (880) generates the first, second, and third switch override signals (818, 828, 838) to limit decoupling of the first, second, and third electrical energy sinks from the electrical energy source or the additional electrical energy source, respectively, to a predetermined number of first, second, and third electrical energy sinks.

16. The electrical system of claim 1, wherein the first switch circuit (440) further comprises:
electrically-controlled switching means (450, 460, 470, 480) for coupling the electrical energy source (210) and the first electrical energy sink (220), wherein the first switch override signal from the override control circuit (280) directly controls the electrically-controlled switching means.

17. The electrical system of claim 16, wherein the electrically-controlled switching means are selected from the group consisting of a gate turn-off thyristor, a power metal-oxide field effect transistor, an insulated-gate bipolar transistor, an analog switch, a relay, and a solid-state relay.

## Patentansprüche

1. Elektrisches System (200) mit:
einer elektrischen Energiequelle (210);
einer ersten elektrischen Energiesenke (220), die ein erstes Senkenstatussignal erzeugt, das einen sicheren Betriebszustand oder ein Risiko, zu einem Sicherheitsproblem zu werden, anzeigt; einer zweiten elektrischen Energiesenke (230), die ein zweites Senkenstatussignal erzeugt, das einen sicheren Betriebszustand oder ein Risiko, zu einem Sicherheitsproblem zu werden, anzeigt; einem ersten Schalter-Stromkreis (240), der die elektrische Energiequelle (210) mit der ersten elektrischen Energiesenke (220) koppelt und ein erstes Schalter-Statussignal erzeugt;
einem zweiten Schalter-Stromkreis (250), der die elektrische Energiequelle (210) mit der zweiten elektrischen Energiesenke (230) koppelt und ein zweites Schalter-Statussignal erzeugt; einer ersten Steuerschaltung (260), die das erste Senkenstatussignal von der ersten elektrischen Energiesenke (220) empfängt und ein erstes Schaltersteuersignal auf der Grundlage des ersten Senkenstatussignals erzeugt, wobei die erste Steuerschaltung den ersten Schalter-Stromkreis (240) mit Hilfe des ersten Schaltersteuersignals steuert;
einer zweiten Steuerschaltung (270), die das zweite Senkenstatussignal von der zweiten elektrischen Energiesenke (230) empfängt und ein zweites Schaltersteuersignal auf der Grundlage des zweiten Senkenstatussignals erzeugt, wobei die zweite Steuerschaltung den zweiten Schalter-Stromkreis (250) mit Hilfe des zweiten Schaltersteuersignals steuert; und
**gekennzeichnet durch** eine Vorrangsteuerungsschaltung (280), die das erste und das zweite Schalterstatussignal empfängt, auf der Grundlage des ersten Schalterstatussignals ein erstes Schaltervorrangsignal erzeugt, das das erste Schaltersteuersignal außer Kraft setzt, um den ersten Schalter-Stromkreis (240) zu steuern, wenn eine erste vorgegebene Vorrangsteuerungsbedingung erfüllt ist, wobei die erste vorgegebene Vorrangsteuerungsbedingung darauf basiert, ob die erste elektrische Energiesenke (220) unter vorgegebenen Umständen eine sicherheitskritische Operation durchführt, und auf der Grundlage des zweiten Schalterstatussignals ein zweites Schaltervorrangsignal erzeugt, das das zweite Schaltersteuersignal außer Kraft setzt, um den zweiten Schalter-Stromkreis (250) zu steuern, wenn eine zweite vorgegebene Vorrangsteuerungsbedingung erfüllt ist, wobei die zweite vorgegebene Vorrangsteuerungsbedingung darauf basiert, ob die zweite elektrische Energiesenke (230) eine sicherheitskritische Operation unter vorgegebenen Umständen durchführt.

2. Elektrisches System nach Anspruch 1, bei dem die erste Steuerschaltung (260) das erste Schalterstatussignal von dem ersten Schalter-Stromkreis (240) zu der Vorrangsteuerungsschaltung (280) leitet und bei dem die zweite Steuerschaltung (270) das zweite Schalterstatussignal von dem zweiten Schalter-Stromkreis (250) zu der Vorrangsteuerungsschaltung (280) leitet.

3. Elektrisches System nach Anspruch 1, bei dem ein Transportfahrzeug (1) die erste elektrische Energiesenke (220) enthält, und bei dem die erste elektrische Energiesenke eine betriebskritische elektrische Komponente des Transportfahrzeugs ist, die die erste vorgegebene Vorrangsteuerungsbedingung erfüllt.

4. Elektrisches System nach Anspruch 3, bei dem das Transportfahrzeug (1) aus einer Gruppe ausgewählt ist, die aus einem Raumfahrzeug, einem Flugzeug, einem Auto, einem Bus, einem Lastwagen und einem Zug besteht.

5. Elektrisches System nach Anspruch 1, bei dem die elektrische Energiequelle (210) ein Quellenstatussignal erzeugt, die erste Steuerschaltung (260) das Quellenstatussignal von der elektrischen Energiequelle (210) empfängt und das erste Schaltersteuersignal auf der Grundlage des ersten Senkenstatussignals und des Quellenstatussignals erzeugt, und bei dem die zweite Steuerschaltung (270) das Quellenstatussignal von der elektrischen Energiequelle (210) empfängt und das zweite Schaltersteuersignal auf der Grundlage des zweiten Senkenstatussignals und des Quellenstatussignals erzeugt.

6. Elektrisches System nach Anspruch 5, ferner mit:
einem Bedienerschalter (290), der ein erstes gewünschtes Schalterstatussignal erzeugt und das erste gewünschte Schalterstatussignal an die erste Steuerschaltung (260) sendet.

7. Elektrisches System nach Anspruch 6, bei dem die erste Steuerschaltung (260) das erste Schaltersteuersignal auf der Grundlage des ersten Senkenstatussignals und des Quellenstatussignals und des ersten gewünschten Schaltzustandssignals erzeugt.

8. Elektrisches System nach Anspruch 7, bei dem das erste Senkenstatussignal und das Quellenstatussignal Vorrang vor dem ersten gewünschten Schaltzustandssignal haben.

9. Elektrisches System nach Anspruch 1, ferner mit:
einer zusätzlichen elektrischen Energiequelle;
einer dritten elektrischen Energiesenke, die ein drittes Senkenstatussignal erzeugt;
einem dritten Schalter-Stromkreis, der die zusätzliche elektrische Energiequelle und die dritte elektrische Energiesenke koppelt und ein drittes Schalterzustandssignal erzeugt; und
einer dritten Steuerschaltung, die das dritte Senkenstatussignal von der dritten elektrischen Energiesenke empfängt und ein drittes Schaltersteuersignal auf der Grundlage des dritten Senkenstatussignals erzeugt, wobei die dritte Steuerschaltung den dritten Schalter-Stromkreis mittels des dritten Schaltersteuersignals steuert, und wobei die Vorrangsteuerungsschaltung das dritte Schaltersteuersignal empfängt und ein drittes Schaltervorrangsignal auf der Grundlage des dritten Schaltersteuersignals erzeugt, das das dritte Schaltersteuersignal außer Kraft setzt, um den dritten Schalter-Stromkreis zu steuern, wenn eine dritte vorgegebene Vorrangsteuerungsbedingung erfüllt ist.

10. Elektrisches System nach Anspruch 9, bei dem die Umgehungssteuerschaltung (390) ferner umfasst:
eine Logikschaltung (380), die das erste, das zweite und das dritte Schaltervorrangsignal auf der Grundlage des ersten, des zweiten und des dritten Schalterzustandssignals erzeugt.

11. Elektrisches System nach Anspruch 10, bei dem die Logikschaltung (580) ferner ein erstes, zweites und drittes Kritikalitätssignal (512, 522, 552) empfängt, um anzuzeigen, ob die erste, zweite und dritte elektrische Energiesenke jeweils eine missionskritische Operation durchführt, und bei dem die Logikschaltung das erste, zweite und dritte Schaltervorrangsignal (518, 528, 558) auf der Grundlage des ersten, zweiten und dritten Kritikalitätssignals erzeugt.

12. Elektrisches System nach Anspruch 11, bei dem die Logikschaltung ferner umfasst:
erste, zweite und dritte ODER-Logikgatter (510, 520, 550),
die das erste, zweite bzw. dritte Schaltervorrangsignal (518, 528, 558) auf der Grundlage des ersten, zweiten und dritten Kritikalitätssignals (512, 522, 552) erzeugen.

13. Elektrisches System nach Anspruch 10, bei dem die Logikschaltung das erste, das zweite und das dritte Schaltervorrangsignal erzeugt, um eine vorgegebene Anzahl von ersten, zweiten und dritten elektrischen Energiesenken mit der elektrischen Energiequelle bzw. der zusätzlichen elektrischen Energiequelle gekoppelt zu halten.

14. Elektrisches System nach Anspruch 13, bei dem die Logikschaltung (680) das erste, zweite und dritte Schaltervorrangsignal (618, 628, 638) erzeugt, um mindestens eine der ersten, zweiten oder dritten elektrischen Energiesenken mit der elektrischen Energiequelle bzw. der zusätzlichen elektrischen Energiequelle gekoppelt zu halten.

15. Elektrisches System nach Anspruch 10, bei dem die Logikschaltung (880) das erste, zweite und dritte Schaltervorrangsignal (818, 828, 838) erzeugt, um die Entkopplung der ersten, zweiten und dritten elektrischen Energiesenken von der elektrischen Energiequelle bzw. der zusätzlichen elektrischen Energiequelle auf eine vorgegebene Anzahl von ersten, zweiten und dritten elektrischen Energiesenken zu begrenzen.

16. Elektrisches System nach Anspruch 1, bei dem der erste Schalter-Stromkreis (440) ferner umfasst:
elektrisch gesteuerte Schaltmittel (450, 460, 470, 480) zum Koppeln der elektrischen Energiequelle (210) und der ersten elektrischen Energiesenke (220), wobei das erste Schaltervorrangsignal von der Vorrangsteuerungsschaltung (280) die elektrisch gesteuerten Schaltmittel direkt steuert.

17. Elektrisches System nach Anspruch 16, bei dem die elektrisch gesteuerten Schaltmittel aus der Gruppe ausgewählt sind, die aus einem Gate-Abschaltthyristor, einem Leistungs-Metalloxid-Feldeffekttransistor, einem Bipolartransistor mit isoliertem Gate, einem Analogschalter, einem Relais und einem Festkörperrelais besteht.

## Revendications

1. Système électrique (200), comprenant :
une source d'énergie électrique (210) ;
un premier consommateur d'énergie électrique (220) qui génère un premier signal d'état de consommation indiquant soit un état de fonctionnement sûr soit un risque d'occurrence d'un danger pour la sécurité ;
un deuxième consommateur d'énergie électrique (230) qui génère un deuxième signal d'état de consommation indiquant soit un état de fonctionnement sûr soit un risque d'occurrence d'un danger pour la sécurité ;
un premier circuit de commutation (240) qui couple la source d'énergie électrique (210) au premier consommateur d'énergie électrique (220) et génère un premier signal d'état de commutation ;
un deuxième circuit de commutation (250) qui couple la source d'énergie électrique (210) au deuxième consommateur d'énergie électrique (230) et génère un deuxième signal d'état de commutation ;
un premier circuit de commande (260) qui reçoit le premier signal d'état de consommation du premier consommateur d'énergie électrique (220), et génère un premier signal de commande de commutation basé sur le premier signal d'état de consommation, dans lequel le premier circuit de commande pilote le premier circuit de commutation (240) au moyen du premier signal de commande de commutation ;
un deuxième circuit de commande (270) qui reçoit le deuxième signal d'état de consommation du deuxième consommateur d'énergie électrique (230), et génère un deuxième signal de commande de commutation basé sur le deuxième signal d'état de consommation, dans lequel le deuxième circuit de commande pilote le deuxième circuit de commutation (250) au moyen du deuxième signal de commande de commutation ; et
**caractérisé en ce qu'**un circuit de commande prioritaire (280) qui reçoit les premier et deuxième signaux d'état de commutation, génère un premier signal prioritaire de commutation basé sur le premier signal d'état de commutation qui a la priorité sur le premier signal de commande de commutation pour commander le premier circuit de commutation (240) si une première condition de priorité prédéterminée est remplie, la première condition de priorité prédéterminée dépendant de l'exécution par le premier consommateur d'énergie électrique (220) d'une opération critique pour la sécurité selon des circonstances prédéterminées, et
génère un deuxième signal prioritaire de commutation basé sur le deuxième signal d'état de commutation qui a la priorité sur le deuxième signal de commande de commutation pour commander le deuxième circuit de commutation (250) si une deuxième condition de priorité prédéterminée est remplie, la deuxième condition de priorité prédéterminée dépendant de l'exécution par le deuxième consommateur d'énergie (230) d'une opération critique pour la sécurité selon des circonstances prédéterminées.

2. Système électrique selon la revendication 1, dans lequel le premier circuit de commande (260) dirige le premier signal d'état de commutation du premier circuit de commutation (240) vers le circuit de commande prioritaire (280) et dans lequel le deuxième circuit de commande (270) dirige le deuxième signal d'état de commutation du deuxième circuit de commutation (250) vers le circuit de commande prioritaire (280).

3. Système électrique selon la revendication 1, dans lequel un véhicule de transport (1) inclut le premier consommateur d'énergie électrique (220), et dans lequel le premier consommateur d'énergie électrique est un composant électrique critique pour la mission du véhicule de transport qui remplit la première condition de priorité prédéterminée.

4. Système électrique selon la revendication 3, dans lequel le véhicule de transport (1) est choisi parmi un groupe composé d'un astronef, d'un aéronef, d'une voiture, d'un bus, d'un camion et d'un train.

5. Système électrique selon la revendication 1, dans lequel la source d'énergie électrique (210) génère un signal d'état de source, dans lequel le premier circuit de commande (260) reçoit le signal d'état de source de la source d'énergie électrique (210) et génère le premier signal de commande de commutation basé sur le premier signal d'état de consommation et sur le signal d'état de source d'énergie, et dans lequel le deuxième circuit de commande (270) reçoit le signal d'état de source de la source d'énergie électrique (210) et génère le deuxième signal de commande de commutation basé sur le deuxième signal d'état de consommation et sur le signal d'état de source.

6. Système électrique selon la revendication 5, comprenant en outre :
un commutateur d'opérateur (290) qui génère un premier signal d'état de commutation souhaité et envoie le premier signal d'état de commutation souhaité au premier circuit de commande (260).

7. Système électrique selon la revendication 6, dans lequel le premier circuit de commande (260) génère le premier signal de commande de commutation basé sur le premier signal d'état de consommation, sur le signal d'état de source et sur le premier signal d'état de commutation souhaité.

8. Système électrique selon la revendication 7, dans lequel le premier signal d'état de consommation et le signal d'état de source sont prioritaires sur le premier signal d'état de commutation souhaité.

9. Système électrique selon la revendication 1, comprenant en outre :
une source d'énergie électrique supplémentaire ;
un troisième consommateur d'énergie électrique qui génère un troisième signal d'état de consommation ;
un troisième circuit de commutation qui couple la source d'énergie électrique supplémentaire et le troisième consommateur d'énergie électrique et génère un troisième signal d'état de commutation ; et
un troisième circuit de commande qui reçoit le troisième signal d'état de consommation du troisième consommateur d'énergie électrique, et génère un troisième signal de commande de commutation basé sur le troisième signal d'état de consommation, dans lequel le troisième circuit de commande pilote le troisième circuit de commutation au moyen du troisième signal de commande de commutation, et dans lequel le circuit de commande prioritaire reçoit le troisième signal d'état de commutation et génère un troisième signal prioritaire de commutation basé sur le troisième signal d'état de commutation qui a la priorité sur le troisième signal de commande de commutation pour commander le troisième circuit de commutation si une troisième condition de priorité prédéterminée est remplie.

10. Système électrique selon la revendication 9, dans lequel le circuit de commande prioritaire (390) comprend en outre :
un circuit logique (380) qui génère les premier, deuxième, et troisième signaux prioritaires de commutation basés sur les premier, deuxième, et troisième signaux d'état de commutation.

11. Système électrique selon la revendication 10, dans lequel le circuit logique (580) reçoit en outre des premier, deuxième, et troisième signaux de criticité pour la mission (512, 522, 552) pour indiquer si les premier, deuxième, et troisième consommateurs d'énergie électrique exécutent une opération critique pour la mission, respectivement, et dans lequel le circuit logique génère les premier, deuxième, et troisième signaux prioritaires de commutation (518, 528, 558) basés sur les premier, deuxième, et troisième signaux de criticité pour la mission.

12. Système électrique selon la revendication 11, dans lequel le circuit logique comprend en outre :
une première, une deuxième, et une troisième portes logiques « OU » (510, 520, 550), qui génèrent des premier, deuxième, et troisième signaux prioritaires de commutation (518, 528, 558), respectivement, basés sur les premier, deuxième, et troisième signaux de criticité pour la mission (512, 522, 552).

13. Système électrique selon la revendication 10, dans lequel le circuit logique génère les premier, deuxième, et troisième signaux prioritaires de commutation pour maintenir un nombre prédéterminé de premier, deuxième, et troisième consommateurs d'énergie électrique couplé à la source d'énergie électrique ou à la source d'énergie électrique supplémentaire, respectivement.

14. Système électrique selon la revendication 13, dans lequel le circuit logique (680) génère les premier, deuxième, et troisième signaux prioritaires de commutation (618, 628, 638) pour maintenir au moins un des premier, deuxième ou troisième consommateurs d'énergie électrique couplé à la source d'énergie électrique ou à la source d'énergie électrique supplémentaire, respectivement.

15. Système électrique selon la revendication 10, dans lequel le circuit logique (880) génère les premier, deuxième, et troisième signaux prioritaires de commutation (818, 828, 838) pour limiter le découplage des premier, deuxième, et troisième consommateurs d'énergie électrique d'avec la source d'énergie électrique ou la source d'énergie électrique supplémentaire, respectivement, à un nombre prédéterminé de premier, deuxième, et troisième consommateurs d'énergie électrique.

16. Système électrique selon la revendication 1, dans lequel le premier circuit de commutation (440) comprend en outre :
des moyens de commutation à commande électrique (450, 460, 470, 480) pour coupler la source d'énergie électrique (210) et le premier consommateur d'énergie électrique (220), dans lequel le premier signal prioritaire de commutation du circuit de commande prioritaire (280) commande directement les moyens de commutation à commande électrique.

17. Système électrique selon la revendication 16, dans lequel les moyens de commutation à commande électrique sont choisis parmi le groupe comprenant : un thyristor de coupure de grille, un transistor de puissance à effet de champ à grille métal-oxyde, un transistor bipolaire à grille isolée, un commutateur analogique, un relais, et un relais statique à semi-conducteur.
